# EUROPÄISCHE PATENTANMELDUNG

(11) **EP 1 113 565 A2**
(43) Veröffentlichungstag der Anmeldung: **04.07.2001**
(21) Anmeldenummer: 00126248.4
(22) Anmeldetag: 01.12.2000
(51) Int. Cl.: H02K 1/32

(54) **Elektrische Maschine**

(30) Priorität: 29.12.1999 DE 19963631
(71) Anmelder: ROBERT BOSCH GMBH, 70442 Stuttgart (DE)
(72) Erfinder: Kaelberer, Peter, 70839 Gerlingen (DE); Lauterbach, Heinz, 73734 Esslingen (DE); Reymann, Klaus, 70839 Gerlingen (DE); Knappenberger, Uwe, 75417 Muehlacker (DE)

(57) **Zusammenfassung**

Es wird eine elektrische Maschine (20), insbesondere Klauenpolgenerator für Kraftfahrzeuge, die einen Stator (40) und einen Rotor (39) mit einer Rotationsachse aufweist, vorgeschlagen. Der Stator (40) weist zumindest eine zum Rotor (39) gerichtete Fläche (47) und der Rotor (39) zumindest eine zum Stator (40) gerichtete Fläche (50) auf, die durch einen Spalt (44) voneinander getrennt sind. Im Spalt (44) strömt ein Kühlmittel und zumindest eine der Flächen (47, 50) weist Nuten (53, 54) auf. Die Nuten (53, 54) sind so ausgebildet, daß sich an einem Übergang (57, 58) von einer der Flächen (47 ,50) zu den Nuten (53, 54) Kühlmittelwirbel ausbilden.

## Beschreibung

Die Erfindung betrifft eine elektrische Maschine mit einem Rotor und mit einem Stator, gemäß der Gattung des unabhängigen Anspruchs.

Elektrische Maschinen mit einem Rotor und mit einem Stator sind beispielsweise bekannt aus der Französischen Patentschrift FR 15 84 258. Der Rotor und/oder der Stator weisen dabei elektromagnetisch wirksame Pole auf, die in Achsrichtung genutet sind. Die Pole des Rotors weisen Flächen auf, die dem Stator zugewandt sind. Umgekehrt weist der Stator beziehungsweise dessen Pole Flächen auf, die dem Rotor zugewandt sind. Jeweils in diesen Flächen sind Nuten ausgenommen. Die Nuten haben dabei den Zweck, magnetische Geräusche zu verringern.

### Vorteile der Erfindung

Mit der erfindungsgemäßen elektrischen Maschine mit den Merkmalen des unabhängigen Anspruchs ist es möglich, durch die Gestaltung der Nuten je nach deren Anordnung im Rotor als auch im Stator Turbulenzen in den Nuten zu erzeugen und dadurch die Abfuhr der Verlustwärme von Rotor und Stator zu verbessern.

Durch die in den Unteransprüchen aufgeführten Maßnahmen ergeben sich vorteilhafte Weiterbildungen und Verbesserungen der im unabhängigen Anspruch angegebenen Merkmale.

Um eine möglichst große genutete Oberfläche des Rotors oder des Stators zu erhalten, sind die Nuten vorteilhafter Weise sowohl in elektromagnetisch erregten Teilen wie den Polen oder Teilen, die in die Zwischenräume zwischen den Polen eingesetzt werden. Eine besonders einfache Gestaltung des Nutquerschnitts ist eine Rechteckform. Darüber hinaus ist es vorteilhaft, wenn der Querschnitt der Nuten trapezförmig ist. Ein trapezförmiger Querschnitt ergibt ein günstigeres Verhältnis von elektromagnetisch nutzbarem Volumen in den elektromagnetisch erregbaren Teilen bezogen auf das Volumen der Nuten, die damit an die minimalen Anfordernisse für Wirbelentstehung besser angepasst sind. Ein bogenförmiger Verlauf ist in der Fertigung günstiger, da die Nutwerkzeuge aufgrund der nicht vorhandenen Ecken im Nutgrund sich nicht so stark abnutzen.

Eine Voraussetzung für die Entstehung von Wirbeln in den Nuten ist dadurch gegeben, daß die Nuten eine Nutbreite haben, die jeweils in etwa einer halben bis ganzen Breite des Spalts zwischen Rotor und Stator entsprechen. Eine weitere Bedingung für die Entstehung von Wirbeln in den Nuten ist dadurch gegeben, daß die Nuten eine Nuttiefe haben, die jeweils in etwa einer halben bis ganzen Breite des Spalts entsprechen. Dabei ist die minimale Nuttiefe für die Entstehung der Wirbel verantwortlich. Der Maximalwert der Nuttiefe ergibt sich dadurch, daß größere Nuttiefen keinen aktiven Beitrag zur Wirbelentstehung leisten, sondern nur noch die elektromagnetische Erregung verschlechtern.

Ist die Anströmung des Rotors im wesentlichen axial, so müssen die Nuten in Umfangsrichtung des Rotors und/oder des Stators verlaufen. Auch dies ist eine Voraussetzung für die Entstehung von Wirbeln in den Nuten. Ist die Bewegung der Kühlluft im wesentlichen in Umfangsrichtung orientiert, so ist eine Bedingung für die Entstehung der Wirbel in den Nuten, daß diese parallel zur Rotationsachse des Rotors verlaufen. Für den Fall, daß die Strömungsrichtung der Kühlluft sowohl eine axiale als auch eine Umfangskomponente aufweist, ist es günstig wenn die Nuten wendelförmig entweder auf der Oberfläche des Stators oder aber auf der Oberfläche des Rotors verlaufen.

### Zeichnung

Die Erfindung wird nachstehend in mehreren Ausführungsbeispielen anhand der zugehörigen Zeichnungen näher erläutert.

Es zeigen
Figur 1 einen Rotor einer elektrischen Maschine, mit axial verlaufender Nut,
Figuren 2 bis 9 Ausführungsbeispiele mit unterschiedlichen Nutenformen wobei ausschnittweise der Übergangsbereich zwischen Rotor und Stator geschnitten dargestellt ist,
Figur 10 einige die Nuten bestimmende Maße,
Figur 11 einen Rotor einer elektrischen Maschine mit dem Verlauf einer Nut in der Umfangsrichtung der Rotors,
Figur 12 einen Rotor nach Figur 8, jedoch mit wendelförmig verlaufender Nut auf der Umfangsfläche des Rotors und
Figur 13 den allgemeinen Aufbau einer bekannten elektrischen Maschine.

### Beschreibung der Ausführungsbeispiele

Identische beziehungsweise gleich wirkende Bauteile sind mit den gleichen Bezugszahlen bezeichnet.

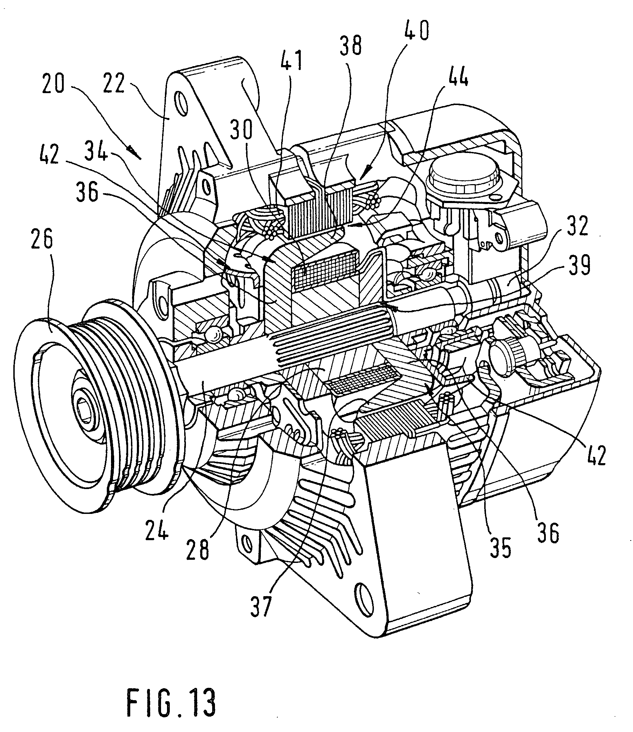

Zum besseren Verständnis der Erfindung ist der Figur 13 der allgemeine Aufbau einer bekannten elektrischen Maschine, hier als Klauenpolgenerator gezeigt. Die elektrische Maschine 20 weist ein Gehäuse 22 auf, in dem eine Antriebswelle 24 gelagert ist. Am außerhalb des Gehäuses 22 liegenden Ende der Antriebswelle 24 ist eine Riemenscheibe 26 angebracht, über die die Antriebswelle 24 mit einem Polkern 28, beispielsweise über einen Keilriemen, angetrieben wird. Innerhalb des Gehäuses 22 ist auf der Antriebswelle 24 eine Erregerwicklung 30 drehfest aufgebracht, die über ebenfalls auf der Antriebswelle 24 aufgebrachte Schleifringe 32 mit einem verhältnismäßig kleinen Erregerstrom bestromt werden kann. Die Erregerwicklung 30 ist seitlich von einer antriebsseitigen Polradhälfte 34 und einer bürstenseitigen Polradhälfte 35 umgeben. Die antriebsseitige Polradhälfte 34 setzt sich aus einer senkrecht zur Antriebswelle 24 verlaufenden Polradscheibe 36 und längs zur Antriebswelle 24 verlaufenden klauenförmigen Polen 37 zusammen. Die bürstenseitige Polradhälfte 35 setzt sich ebenfalls aus einer senkrecht zur Antriebswelle 24 verlaufenden Polradscheibe 36 und längs zur Antriebswelle 24 verlaufenden klauenförmigen Polen 38 zusammen. Jede der Polradhälften 34 und 35 weist eine Vielzahl dieser in Umfangsrichtung gleichmäßig zueinander beabstandeten Pole 37, 38 auf, wobei die Anzahl vom Anwendungszweck des Generators abhängt.

Die Antriebswelle 24 bildet mit den Polradhälften 34 und 35, dem Polkern 38 und der Erregerwicklung 30 einen Rotor 39 mit einer Rotationsachse.

Radial beabstandet zu den Polen 37 und 38 der beiden Polradhälften 34 und 35 ist ein feststehender Ständer 40 angeordnet, der beispielsweise eine drei-phasige Ständerwicklung 41 aufweist. Zwischen dem Stator 40 und dem Rotor 39 befindet sich ein zur Antriebswelle 24 konzentrischer Luftspalt 44, der Rotor 39 und Stator 40 voneinander trennt. An den zu den Wellenenden der Antriebswelle 24 gerichteten Außenseiten der Polradscheiben 36 sind Lüfter 42 angeordnet. Wird der Rotor 39 dieses, dem Stand der Technik entsprechenden Generators über die Riemenscheibe 26 angetrieben, wird das im Luftspalt 44 befindliche Kühlmittel als sogenannte Couette-Strömung transportiert. Diese Strömung weist ein sogenanntes laminares Strömungsprofil auf. Der Wärmeübergang zwischen dem Rotor 39 und dem strömenden Kühlmittel Luft entspricht dem ruhender Luft und ist unbefriedigend. Da das Kühlmittel vom Rotor 39 wenig Wärmeenergie aufnimmt, kann an den kühleren Stator 40 oder die Umgebung auch nicht viel Wärme abgegeben werden.

Um ein verbesserte Strömung des Kühlmittels im Spalt 44 zu erreichen, ist vorgesehen, in eine zum Rotor 39 gerichtete Fläche 47 des Stators 40 oder in eine zum Stator 40 gerichtete Fläche 50 des Rotors 39 Nuten einzuarbeiten, so daß zumindest eine der Flächen 47, 50 Nuten 53, 54 aufweist. Die Nuten 53, 54 sind so ausgebildet, daß sich an einem Übergang 57 von einer der Flächen 47, 50 zu den Nuten 53, 54 Kühlmittelwirbel ausbilden.

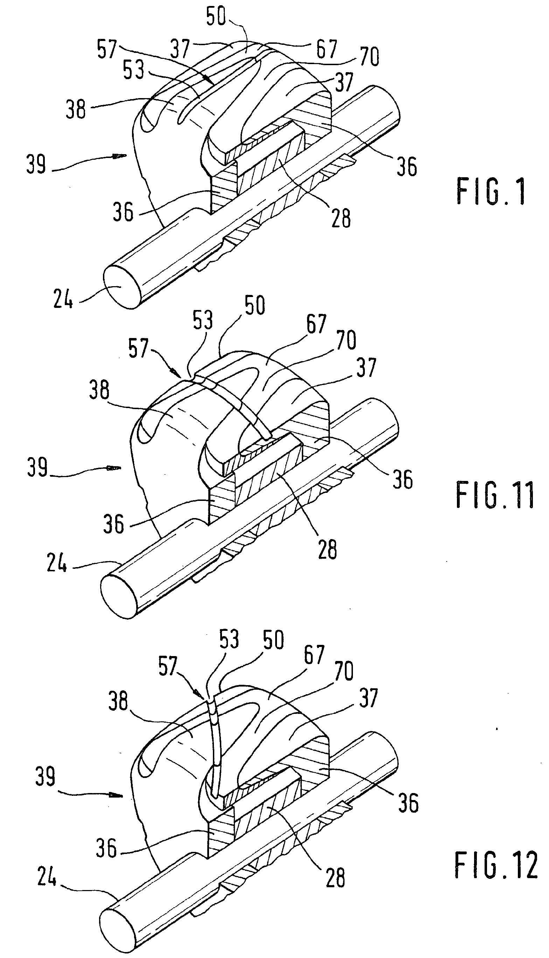

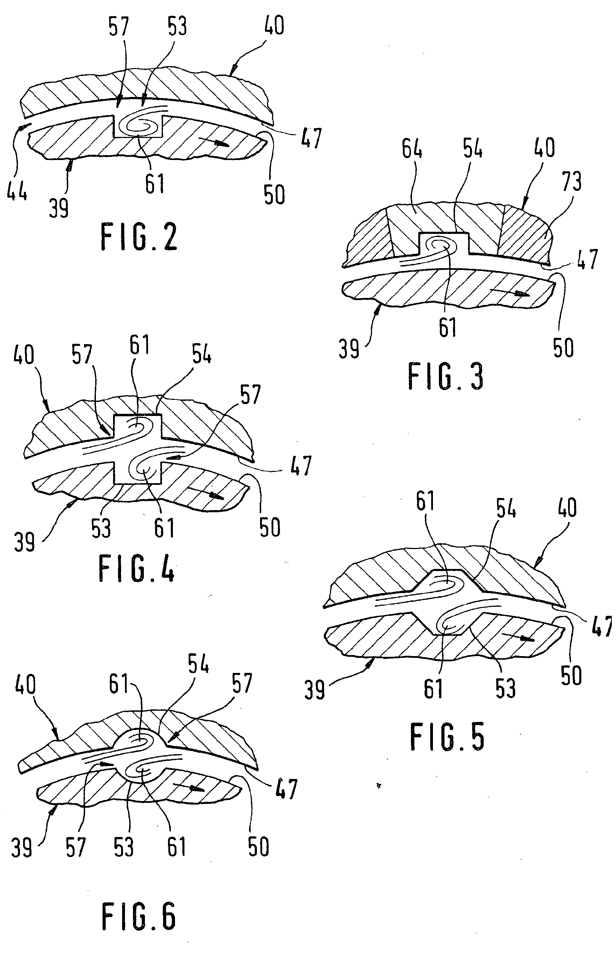

In einem ersten Ausführungsbeispiel ist in der Figur 1 der Rotor 39 beispielhaft mit der parallel zur Rotorachse verlaufenden Nut 53 im Rotor 39 dargestellt. Wird das Kühlmittel Luft, das sich im Spalt 44 befindet, mittels der Lüfter 42 im wesentlichen in axialer Richtung bewegt, bilden sich beziehungsweise lösen sich sogar am Übergang 57 von der Fläche 50 zur Nut 53 Wirbel ab, so daß in der Nut 53 eine turbulente Strömung 61 vorliegt. Diese turbulente Strömung 61 weist quer zur Strömungsrichtung konstant rotierende Wirbel auf. Die damit verbundene Querbewegung der Luft mit einer Geschwindigkeitskomponente in radialer Richtung ermöglicht es im Kühlmittel einen konvektiven Wärmeübergang zu erzeugen, vergleiche auch Figur 2.

Der konvektive Wärmeübergang kann alternativ auch dadurch erhöht werden, indem der Stator 40 in gleicher Weise wie eben für den Rotor 39 beschrieben, Nuten 54 in zumindest einem seiner Statorpole 64 aufweist siehe auch Figur 3. Wie in der Figur 4 dargestellt, können sowohl der Stator 40 als auch der Rotor 39 Nuten 54 beziehungsweise 53 aufweisen. Alternativ zu den rechteckförmigen Querschnitten der Nuten 53 und 54 der Figuren 2, 3 und 4 sind in der Figur 5 für den Stator 40 und den Rotor 39 jeweils Nuten 53 beziehungsweise 54 mit trapezförmigem Querschnitt dargestellt. Eine weitere Ausführungsmöglichkeit der Nuten ist in der Figur 6 dargestellt. Die dort für den Stator 40 und für den Rotor 39 vorgesehenen Nuten 43 beziehungsweise 44 weisen einen bogenförmigen Verlauf auf.

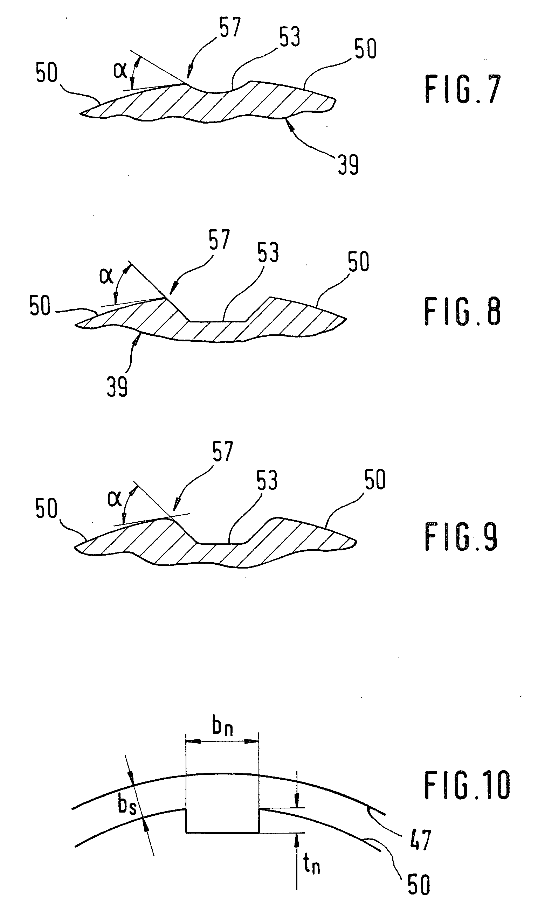

Der Übergang 57 von der vom Stator 40 gerichteten Fläche 50 in die Nut 53, siehe auch Figuren 7 und 8, muß mit einem Winkel α erfolgen, der einen Mindestwert nicht unterschreiten darf, da sonst die Kühlmittelströmung im Spalt 44 nicht abreißt und somit auch kein Kühlmittelwirbel beziehungsweise keine turbulente Strömung 61 entsteht. Ein für den Winkel α günstiger Bereich ist der Bereich zwischen α = 45° und 90°.

Wie in der Figur 9 dargestellt, kann der Übergang 57 zwischen der zum Stator 40 gerichteten Fläche 50 und Nut 53 auch abgerundet erfolgen.

In der Figur 10 sind einige die Nuten 53 und 54 bestimmende Maße angegeben. Damit in den Nuten 53 und 54 eine turbulente Strömung 61 entsteht, weisen die Nuten 53 beziehungsweise 54 mindestens eine Nutbreite bₙ auf, die jeweils in etwa eine halben bis ganzen Breite bₛ des Spalts 44 entspricht. Darüber hinaus können die Nuten breiter sein; dies ist jedoch nicht von Vorteil, da sich in einer Nut immer nur ein Wirbel bildet und sich keine Wirbelschleppe ausbildet, die den Wärmeübergang weiter verbessern könnte. Für die Nuttiefe tₙ der Nuten 53 beziehungsweise 54 gilt, daß sie jeweils in etwa einer halben bis ganzen Breite bₛ des Spalts 44 entspricht.

Im Gegensatz zur Darstellung der Nut 53 in der Figur 1, ist in der Figur 11 ein Rotor 39 dargestellt, dessen eine Nut 53 beispielsweise in Umfangsrichtung verläuft. Eine Anordnung der Nut 53 in Umfangsrichtung ist im wesentlichen dann von Vorteil, wenn die Geschwindigkeitskomponente der im Spalt 44 strömenden Luft beziehungsweise des Kühlmittels in axialer Richtung überwiegt. Eine solche axiale Komponente der Strömung kann zum Beispiel dadurch erreicht werden, daß die Lüfter 42 beziehungsweise das Gehäuse 22 die Luft in Richtung des Spalts umlenken, siehe auch Figur 13. Während die Nut 53 in der Figur 1 nur eine axiale Komponente und die Nut 53 in der Figur 11 nur eine Komponente in Umfangsrichtung aufweist, weist die in Figur 12 dargestellte Nut 53 sowohl eine axiale als auch eine Komponente in Umfangsrichtung auf, und verläuft wendelförmig in der zum Stator 40 gerichteten Fläche 50 des Rotors 39.

Die in den Figuren 1, 11 und 12 dargestellten Rotoren 39 weisen zwischen ihren Polen 37 beziehungsweise 38 ein Teil 67 auf, das Zwischenräume zwischen den Polen 37 beziehungsweise 38 füllt. Das Ausfüllen dieser Zwischenräume hat den Vorteil, daß die Oberfläche 50 des Rotors 39 deutlich weniger stark zerklüftet ist. In der Folge wird dadurch die Schallanregung durch den Rotor 39 verringert. Wie die Pole 37 beziehungsweise 38 weist auch das Teil 67 eine zum Stator 40 gerichtete Fläche 70 auf, die beispielsweise in der gemeinsamen, im wesentlichen zylindrischen Oberfläche 50 des Rotors liegt. Aus diesem Grund ist es sinnvoll, daß das elektromagnetisch nicht erregbare Teil 67 des Rotors 39 ebenfalls die Nuten 53 aufweist.

Die Breite bₛ des Spalts 44 ist üblicherweise im Bereich zwischen 0,25 mm und 1,2 mm.

Wie für einen Fachmann leicht ersichtlich ist, ist eine axiale oder in Umfangsrichtung orientierte Nutenführung der Nuten 54 auch bei einem Stator 40 möglich. Gleiches gilt für eine spiralenförmige Orientierung der Nuten 54. Ebenso ist leicht ersichtlich, daß die Nuten 54 im Stator 40 nicht nur durch magnetisch aktive Teile wie beispielsweise Statorpole 64 auch durch Teile 73 gehen können, die die Zwischenräume zwischen Statorpolen 64 füllen.

## Patentansprüche

1. Elektrische Maschine (20), insbesondere Klauenpolgenerator für Kraftfahrzeuge, die einen Stator (40) und einen Rotor (39) mit einer Rotationsachse aufweist, wobei der Stator (40) zumindest eine zum Rotor (39) gerichtete Fläche (47) und der Rotor (39) zumindest eine zum Stator (40) gerichtete Fläche (50) aufweist, die durch einen Spalt (44) voneinander getrennt sind, wobei im Spalt (44) ein Kühlmittel strömt und zumindest eine der Flächen (47, 50) Nuten (53, 54) aufweist, dadurch gekennzeichnet. daß die Nuten (53, 54) so ausgebildet sind, das sich an einem Übergang (57, 58) von der Fläche (47, 50) zu den Nuten (53, 54) Kühlmittelwirbel ausbilden.

2. Elektrische Maschine nach Anspruch 1, dadurch gekennzeichnet, daß ein elektromagnetisch nicht erregbares Teil (67) des Rotors (39) oder des Stators (40) die Nuten (53, 54) aufweist.

3. Elektrische Maschine nach Anspruch 1 oder 2, dadurch gekennzeichnet, daß die Nuten (53, 54) mit einem Winkel (α) in die zum Stator (40) oder zum Rotor (39) gerichtete Fläche (50, 47) übergehen.

4. Elektrische Maschine nach einem der vorstehenden Ansprüche, dadurch gekennzeichnet, daß die Nuten (53, 54) einen trapezförmigen oder rechteckförmigen Querschnitt haben.

5. Elektrische Maschine nach einem der vorstehenden Ansprüche, dadurch gekennzeichnet, daß die Nuten (53, 54) eine Nutbreite (bₙ) haben, die jeweils in etwa einer halben bis ganzen Breite (bₛ) des Spalts (44) entspricht.

6. Elektrische Maschine nach einem der vorstehenden Ansprüche, dadurch gekennzeichnet, daß die Nuten (53, 54) eine Nuttiefe (nₜ) haben, die jeweils in etwa einer halben bis ganzen Breite (bₛ) des Spalts (44) entspricht.

7. Elektrische Maschine nach einem der vorstehenden Ansprüche, dadurch gekennzeichnet, daß die Nuten (53, 54) in Umfangsrichtung des Rotors (39) und/oder Stators (40) verlaufen.

8. Elektrische Maschine nach einem der vorstehenden Ansprüche, dadurch gekennzeichnet, daß die Nuten (53, 54) parallel zur Rotationsachse des Rotors (39) verlaufen.

9. Elektrische Maschine nach einem der vorstehenden Ansprüche, dadurch gekennzeichnet, daß die Nuten (53, 54) wendelförmig in zumindest einer zum Stator (40) gerichteten Fläche des Rotors (39) und/oder in einer zum Rotor (39) gerichteten Fläche des Stators (40) verlaufen.
